# EUROPEAN PATENT SPECIFICATION

(11) **EP 3 636 527 B1**
(45) Date of publication and mention of the grant of the patent: **15.09.2021**
(21) Application number: 18809637.4
(22) Date of filing: 14.05.2018
(51) Int. Cl.: B62J 27/00, B60R 21/16, B62J 27/20

(54) **AIRBAG DEVICE FOR SADDLE-TYPE VEHICLE**
AIRBAGVORRICHTUNG FÜR SATTELFAHRZEUG
DISPOSITIF DE COUSSIN DE SÉCURITÉ GONFLABLE POUR VÉHICULE DU TYPE À SELLE

(30) Priority: 02.06.2017 JP 2017110356
(43) Date of publication of application: 15.04.2020
(73) Proprietor: Honda Motor Co., Ltd., Tokyo 107-8556 (JP)
(72) Inventor: AIKYO, Yutaka, Wako-shi Saitama 351-0193 (JP); SATO, Takashi, Wako-shi Saitama 351-0193 (JP); MIYAKAWA, Futoshi, Wako-shi Saitama 351-0193 (JP); KOBAYASHI, Yuki, Wako-shi Saitama 351-0193 (JP)
(74) Representative: Weickmann & Weickmann PartmbB
(86) International application number: PCT/JP2018/018527
(87) International publication number: WO 2018/221179

(56) References cited:
- JP-A- 2003 104 153
- JP-A- 2003 104 153
- JP-A- 2003 127 944
- JP-A- 2003 276 553
- JP-A- 2003 312 567
- JP-A- 2006 076 480
- JP-A- 2015 145 151

## Description

### [Technical Field]

The present invention relates to an airbag device for a saddle-type vehicle.

### [Background Art]

Conventionally, airbag devices for saddle-type vehicles in which the airbag is easily deployed upward by discharging gas upward from an inflator provided at the bottom of the airbag device are known (e.g., see JP 2015-145151 A).

JP 2003 104 153 A shows an airbag device according to the preamble of claim 1. There, an additional cylindrically formed inflator, oriented in the front-rear direction of the vehicle, is located outside the airbag retainer and connected thereto through a hose.

### [Summary of Invention]

### [Technical Problem]

By the way, when the capacity of the inflator of the airbag device is increased according to the volume of the airbag, the size of the inflator is likely to increase in a direction orthogonal to a gas discharging direction. For this reason, when the inflator is disposed in a direction in which the gas is discharged upward as in the case of the prior art, the size of the airbag device in a front-rear direction increases. Furthermore, the airbag needs to be deployed upward to provide proper protection of the rider.

The present invention has been implemented in view of the aforementioned circumstances and it is an object of the present invention to provide an airbag device for a saddle-type vehicle compactly in a front-rear direction and enable the airbag to be deployed upward.

### [Solution to Problem]

The present invention is an airbag device for a saddle-type vehicle according to claim 1.

The airbag device includes a retainer (41) that is provided in front of a seat (13) for a rider, an inflator (43), and an airbag (42) that is housed in the retainer (41), is inflated by means of a gas discharged from the inflator (43) and is deployed in front of the rider, in which the cylindrically formed inflator (43) is disposed oriented in a front-rear direction of the vehicle toward which an axis (43c) of the inflator (43) is oriented, and the retainer (41) is provided with a deflection part (70) that deflects the gas discharged from the inflator (43) into the airbag (42) from a flow in a left-right direction to a flow in an upward direction.

In the above-described invention, the deflection part (70) may be provided with a left-right extending part (46) that extends in the left-right direction from the inflator (43) side and an upward extending part (47) that extends upward from the left-right extending part (46) .

In the above-described invention, the upward extending part (47) may be disposed in the rear of a steering shaft (20) and the inflator (43) and a main switch (80) of the saddle-type vehicle may be disposed separately on the left and right across the upward extending part (47).

Furthermore, the above-described invention may be configured such that a housing box (81) is disposed above the inflator (43).

In the above-described invention, the upward extending part (47) may be provided with a curved surface part (57a) that receives the gas that flows from the left-right extending part (46) into the upward extending part (47).

In the above-described invention, the deflection part (70) may be formed of the left-right extending part (46) and the upward extending part (47) into an L shape, and the L-shaped bent part (53a) may be formed into a curved surface shape.

### [Advantageous Effects of Invention]

The airbag device for a saddle-type vehicle according to the present invention includes the retainer that is provided in front of the seat for the rider, the inflator, and the airbag that is housed in the retainer, is inflated by means of the gas discharged from the inflator, and is deployed in front of the rider, in which the cylindrically formed inflator is disposed oriented in the front-rear direction of the vehicle toward which the axis of the inflator is oriented, and the retainer includes the deflection part that deflects the gas discharged from the inflator into the airbag from the flow in the left-right direction to the flow in the upward direction. This makes it possible to dispose the inflator in the front-rear direction in a space-saving manner, and provide the airbag device compactly in the front-rear direction. Furthermore, the gas of the inflator is deflected by the deflection part from the flow in the left-right direction to the flow in the upward direction, and it is thereby possible to deploy the airbag upward.

In the above-described invention, the deflection part may include the left-right extending part that extends in the left-right direction from the inflator side and the upward extending part that extends upward from the left-right extending part. According to this configuration, it is possible for the left-right extending part to guide the gas discharged from the inflator in the left-right direction and for the upward extending part to guide the gas upward and deploy the airbag upward.

In the above-described invention, the upward extending part may be disposed in the rear of the steering shaft, and the inflator and the main switch of the saddle-type vehicle may be disposed separately on the left and right across the upward extending part. According to this configuration, it is possible to deploy the airbag upward from the steering shaft side and efficiently dispose the inflator and the main switch on the left and right of the upward extending part.

Furthermore, in the above-described invention, a housing box may be disposed above the inflator. According to this configuration, it is possible to provide the housing box using a space in an upper part of the inflator.

Furthermore, in the above-described invention, the upward extending part may include a curved surface part that receives a gas flowing from the left-right extending part into the upward extending part. According to this configuration, the curved surface part receives the gas flowing from the left-right extending part into the upward extending part, and it is thereby possible to cause the gas to smoothly flow upward and efficiently deploy the airbag upward.

Furthermore, in the above-described invention, the deflection part is formed of the left-right extending part and the upward extending part into an L shape, and the L-shaped bent part may be formed into a curved surface shape. According to this configuration, the curved shaped bend part can efficiently guide the gas, the direction of which is changed upward by the L-shaped deflection part and cause the gas to smoothly flow upward.

### [Brief Description of Drawings]

[Fig. 1] Fig. 1 is a left side view of a motorcycle according to an embodiment of the present invention.
[Fig. 2] Fig. 2 is a diagram of a peripheral part of an inner cover seen from the rear side.
[Fig. 3] Fig. 3 is a front view of an airbag device seen from the rear side.
[Fig. 4] Fig. 4 is a left side view of the airbag device.
[Fig. 5] Fig. 5 is a diagram of the airbag device seen from above.
[Fig. 6] Fig. 6 is a diagram of the airbag device seen from below.
[Fig. 7] Fig. 7 is a diagram of a case seen from the rear.
[Fig. 8] Fig. 8 is a front view of the airbag device from which the cover member is removed when seen from the rear side.
[Fig. 9] Fig. 9 is a left side view of the airbag device from which the cover member is removed.
[Fig. 10] Fig. 10 is a cross-sectional view illustrating a state in which an inflator is attached.
[Fig. 11] Fig. 11 is a diagram time-sequentially illustrating a state of deployment of the airbag.
[Fig. 12] Fig. 12 is a diagram time-sequentially illustrating a state of deployment of the airbag seen from one side.

### [Description of Embodiments]

Hereinafter, an embodiment of the present invention will be described with reference to the accompanying drawings. Note that in the description, descriptions of directions such as front, rear, left, right and up and down are the same as the directions with respect to the vehicle body unless otherwise specified. A symbol "FR" shown in each drawing indicates the front of the vehicle body, a symbol "UP" indicates the upper side of the vehicle body, and a symbol "LH" indicates the left side of the vehicle body.

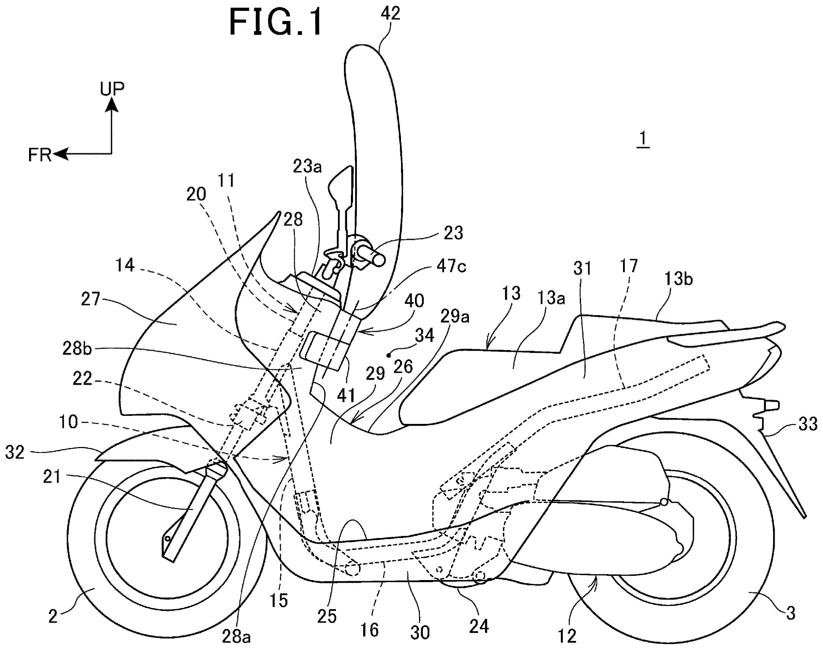

Fig. 1 is a left side view of a motorcycle 1 according to an embodiment of the present invention. Fig. 1 illustrates a state of an airbag 42, which will be described later, in which the airbag is inflated and deployed. Note that Fig. 1 shows only the left side one of each component provided as a left and right pair, accompanied by each reference numeral.

The motorcycle 1 is a scooter type saddle-type vehicle including a body frame 10, a steering system 11 that steerably supports a front wheel 2, a power unit 12 supported at the rear of the body frame 10, a rear wheel 3 and a seat 13 for a rider to sit thereon in a straddled posture.

The body frame 10 includes a head pipe 14 being provided at a front end thereof, a main frame 15 that extends backward and downward from the head pipe 14, a lower frame 16 that extends backward from the bottom end of the main frame 15 and a left and right pair of rear frames 17, 17 that extend backward, rising backward from the lower frame 16. The head pipe 14 is disposed at the center of the vehicle width.

The steering system 11 includes a steering shaft 20 being pivotally supported by the head pipe 14, a left and right pair of front forks 21, 21 disposed on both left and right sides of the front wheel 2 to support the front wheel 2, a bridge member 22 fixed to the bottom end of the steering shaft 20 to connect the upper parts of the left and right front forks 21, 21 and a handle 23 which is fixed to the top end of the steering shaft 20. The handle 23 is connected to the steering shaft 20 via a handle post 23a which is fixed to the top end of the steering shaft 20.

In a side view of the vehicle, the head pipe 14 leans backward with respect to the up-down direction by a predetermined caster angle set for the motorcycle 1. The steering shaft 20 is inserted into and pivotally supported by the head pipe 14 and is disposed to be inclined rearward in a side view of the vehicle. The steering shaft 20 is positioned at the center of the vehicle width.

The power unit 12 is a unit swing engine being provided with a function of an engine as a drive source of the rear wheel 3 and a function of a swing arm that supports the rear wheel 3. The power unit 12 is pivotally supported by the body frame 10 in a freely swingable manner via a link member 24 which is provided at the front-end part.

The seat 13 is provided above the rear frame 17. The seat 13 is integrally provided with a front-side seat 13a on which the driver is seated and a rear-side seat 13b on which a fellow passenger is seated.

Step floors 25, 25 on which the driver places his/her left and right feet are provided in pairs on the right and left sides of the lower frame 16 which is positioned at the center of the vehicle width.

The motorcycle 1 includes a body cover 26 that covers the vehicle body such as the body frame 10.

The body cover 26 includes a front cover 27 that covers the upper parts of the head pipe 14 and the steering system 11 from the front side and the left and right sides, and an inner cover 28 which is continuous to the rear edge of the front cover 27 and covers the upper parts of the head pipe 14 and the steering system 11 from the rear.

The body cover 26 includes a center cover 29 which is positioned in front of and below the front-side seat 13a, an under cover 30 that covers the vehicle body from below the step floors 25, 25 and a rear side cover 31 that covers the rear frames 17, 17 under the seat 13 from sides.

The motorcycle 1 includes a front fender 32 and a rear fender 33.

The front of the center cover 29 is continuous to the bottom of the inner cover 28. The center cover 29 is positioned on the inside of the left and right legs of the driver extending from the front-side seat 13a to the step floors 25, 25. An upper edge 29a of the center cover 29 is positioned below the front-side seat 13a.

In a side view of the vehicle, the rear surface of the inner cover 28, the upper edge 29a of the center cover 29 and the front surface of the front-side seat 13a partition a straddle space 34 being recessed downward. When getting on and off the motorcycle 1, the rider can straddle the motorcycle 1 through the straddle space 34.

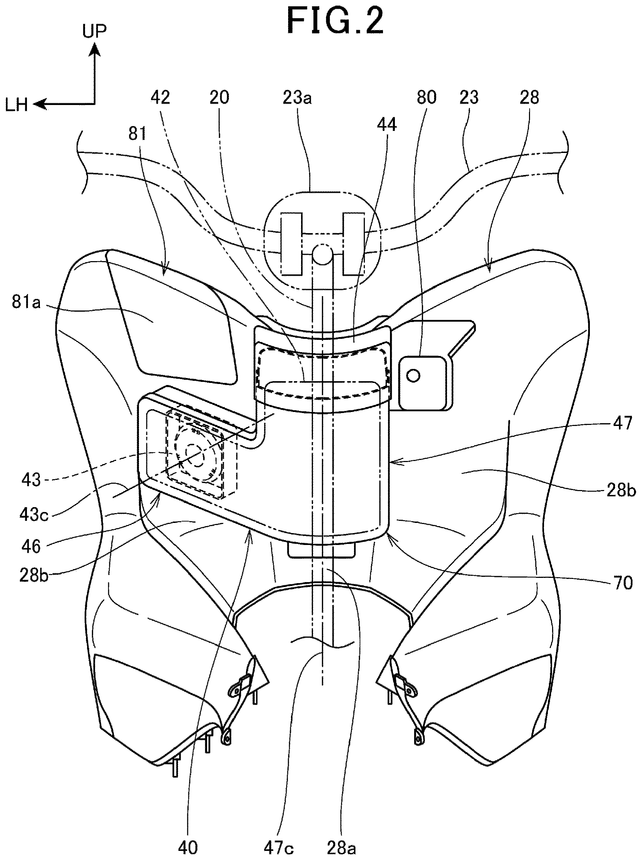

Fig. 2 is a diagram of a peripheral part of the inner cover 28 seen from the rear side.

As shown in Fig. 1 and Fig. 2, the motorcycle 1 includes an airbag device 40 that protects the rider from a shock. The airbag device 40 is provided on the rear surface of the inner cover 28 and is positioned in front of the driver who is seated on the front-side seat 13a. Furthermore, the airbag device 40 is also provided in the rear of the steering shaft 20 under the handle 23 and is positioned in front of the straddle space 34.

In a side view of the vehicle, the rear surface of the inner cover 28 is provided substantially parallel to the steering shaft 20 and falls rearward along the steering shaft 20.

In the upper part of the rear surface of the inner cover 28, as shown in Fig. 1 and Fig. 2, the central part 28a in the vehicle width direction located in the rear of the steering shaft 20 is located at the rearmost and the side parts 28b and 28b which are positioned on the left and right of the central part 28a are inclined so as to be located on the front side toward the outside in the vehicle width direction.

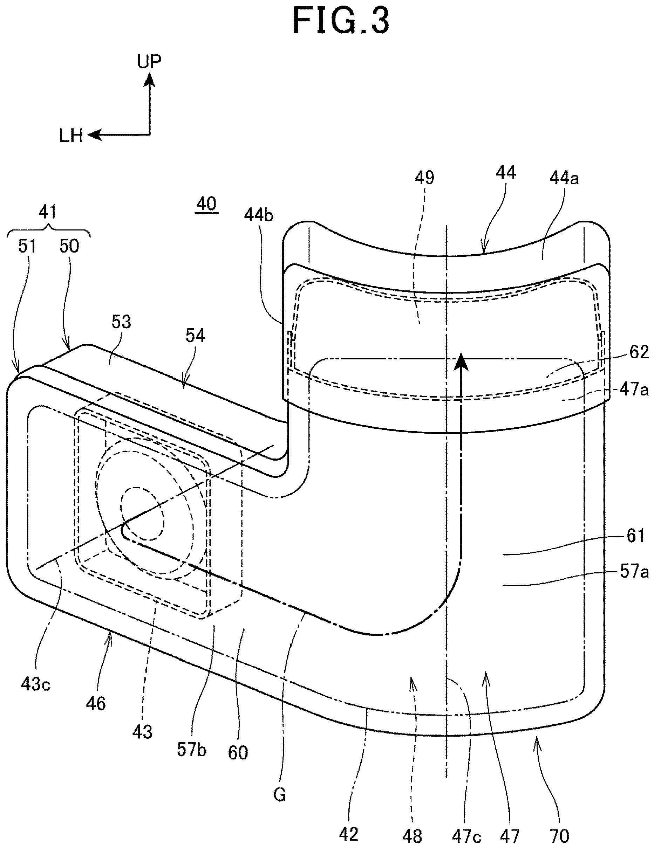

Fig. 3 is a front view of the airbag device 40 seen from the rear side (driver side).

The airbag device 40 includes a box-shaped retainer 41 provided in front of the rider who is seated on the seat 13, an airbag 42 housed in the retainer 41, an inflator 43 for discharging gas into the airbag 42 and a cover member 44 attached to the top of the retainer 41.

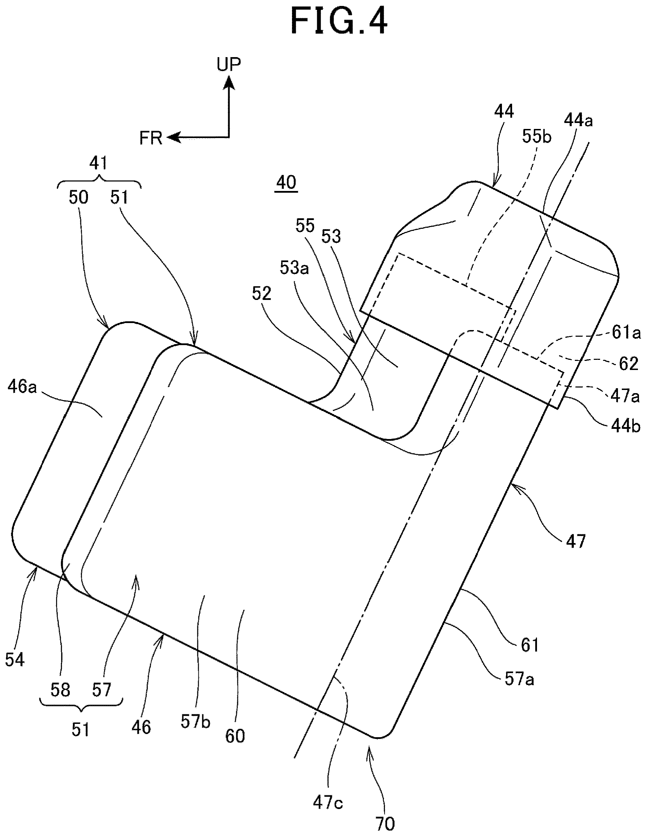

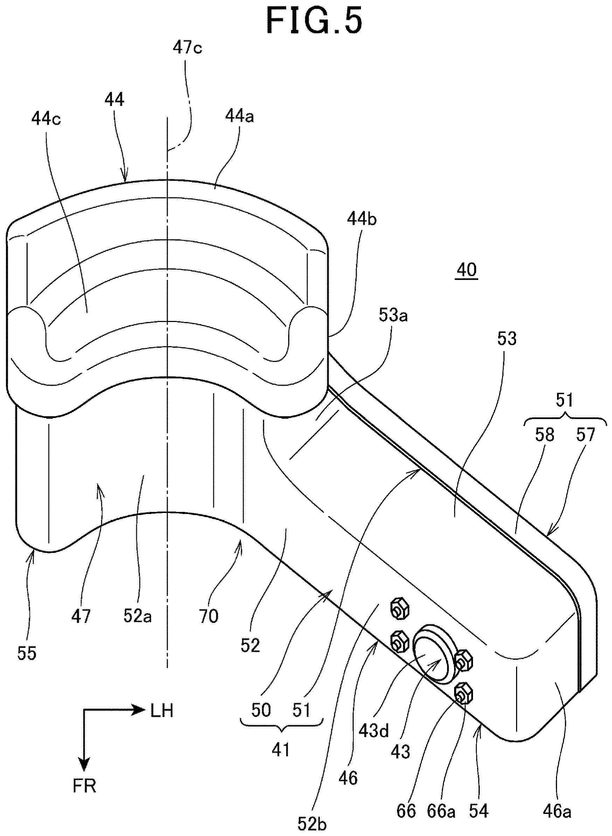

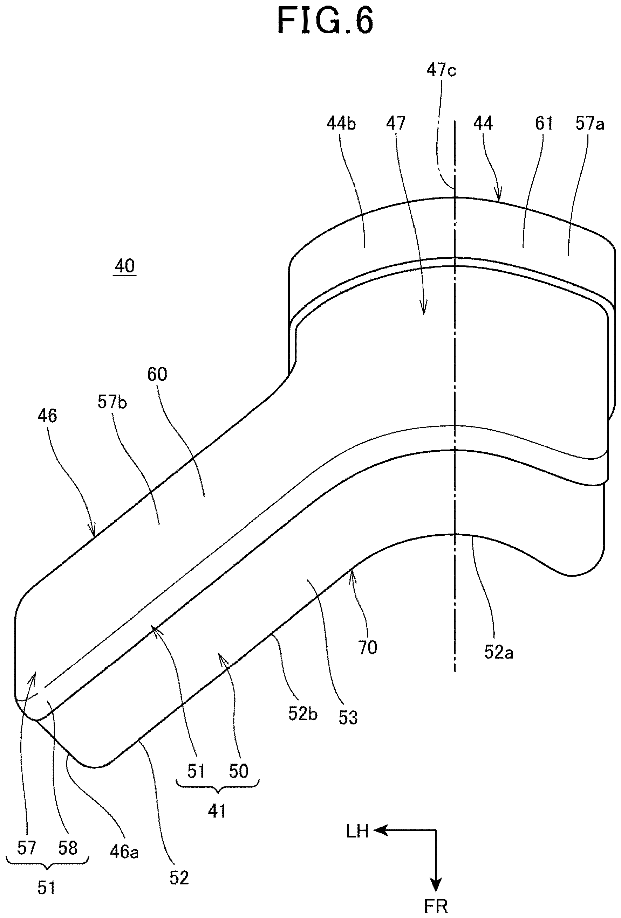

Fig. 4 is a left side view of the airbag device 40. Fig. 5 is a diagram of the airbag device 40 seen from above. Fig. 6 is a diagram of the airbag device 40 seen from below.

Referring to Fig. 2 to Fig. 6, the retainer 41 when seen from the rider side (rear side) is a box-shaped member formed into a reverse L shape. Note that the L shape in the following description means that the retainer 41 appears L-shaped when seen from the front or the rear. Although the retainer 41 appears reverse L-shaped when seen from the rear, it can be said that it is formed into an L shape.

The retainer 41 is positioned in front of the front-side seat 13a, facing the front surface of the front-side seat 13a.

The retainer 41 includes a left-right extending part 46 extending in the left-right direction (vehicle width direction) and an upward extending part 47 extending upward from the left-right extending part 46.

The left-right extending part 46 is a box-shaped part extending in the vehicle width direction. An outside end part 46a in the vehicle width direction of the left-right extending part 46 is positioned outside in the vehicle width direction the steering shaft 20 which is positioned at the vehicle width center. The left-right extending part 46 extends from the outside end part 46a to the vehicle width center along the rear surface of the side part 28b of the inner cover 28.

The upward extending part 47 is a box-shaped part extending in the up-down direction along the steering shaft 20 and falls rearward in a side view of the vehicle. The upward extending part 47 is positioned at the vehicle width center and covers the central part 28a of the inner cover 28 from the rear.

A center line 47c of the upward extending part 47 which extends in the up-down direction by passing through the center of the upward extending part 47 is provided substantially parallel to the steering shaft 20 in the rear of the steering shaft 20 and falls rearward. The center line 47c is positioned at the center of the vehicle width.

An inner end part in the vehicle width direction of the left-right extending part 46 is connected to the lower outer surface of the lower part of the upward extending part 47. That is, the retainer 41 is formed into an L shape by the upward extending part 47 extending upward from the inner end part of the left-right extending part 46. An L-shaped airbag housing space 48 formed of an inner space of the left-right extending part 46 and an inner space of the upward extending part 47 is formed in the interior of the retainer 41.

A top surface opening 49 that exposes the airbag housing space 48 upward is formed on the top surface of the upward extending part 47. The airbag 42 is deployed upward from the top surface opening 49. The opening surface of the top surface opening 49 is substantially orthogonal to the center line 47c of the upward extending part 47. The top surface opening 49 is closed with the cover member 44.

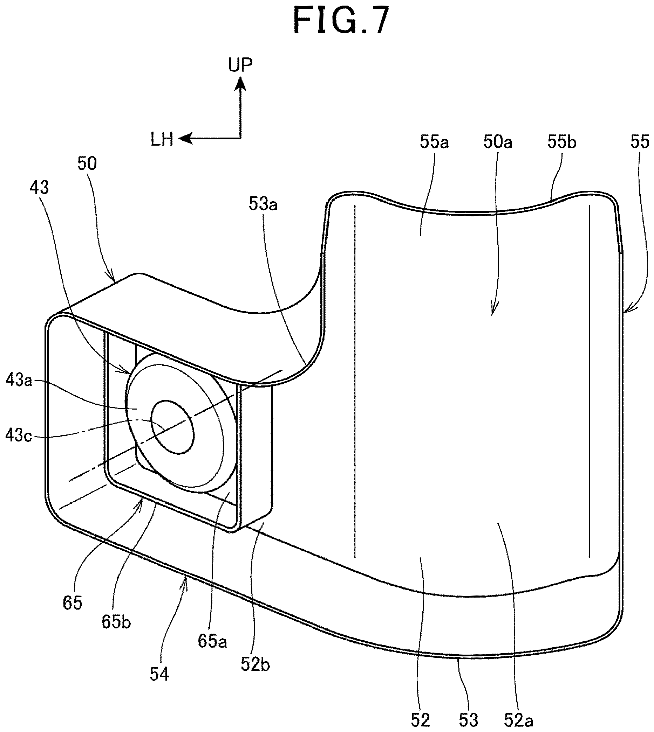

The retainer 41 is formed by connecting a box-shaped case 50, the rear surface (surface on the rider side) of which is opened with a cover 51 that covers the rear surface opening 50a (Fig. 7) of the case 50. The case 50 and the cover 51 are made of, for example, a metallic material.

Fig. 7 is a diagram of the case 50 seen from the rear.

The case 50 includes an L-shaped retainer front surface 52 and a peripheral wall part 53 erected in the rear from the entire circumference of the periphery of the retainer front surface 52 other than the part of the case top surface opening 55a which will be described later. The rear surface opening 50a is partitioned by a trailing edge of the peripheral wall part 53.

The case 50 is integrally provided with a left-right extending case part 54 constituting the front of the left-right extending part 46 and an up-down extending case part 55 constituting the front of the upward extending part 47.

A case top surface opening 55a for which no peripheral wall part 53 is provided and which is opened is formed at the top end of the up-down extending case part 55. The case top surface opening 55a constitutes the most part of the top surface opening 49.

The part of the up-down extending case part 55 of the retainer front surface 52 constitutes a front-side curved surface part 52a which is curved to be convex rearward when seen from above. The front-side curved surface part 52a is provided over a substantially overall length in the up-down direction of the upward extending part 47.

The part of the left-right extending case part 54 of the retainer front surface 52 constitutes a front-side flat part 52b extending along the side part 28b (Fig. 2) of the inner cover 28.

The peripheral wall part 53 of the case 50 includes a bent part 53a where the peripheral wall part of the top surface of the left-right extending case part 54 and the peripheral wall part of the side face of the upward extending part 47 cross each other in an L shape. The bent part 53a is formed like a curved surface so that the orientation of the peripheral wall part 53 gently changes from the left-right direction to the upward direction.

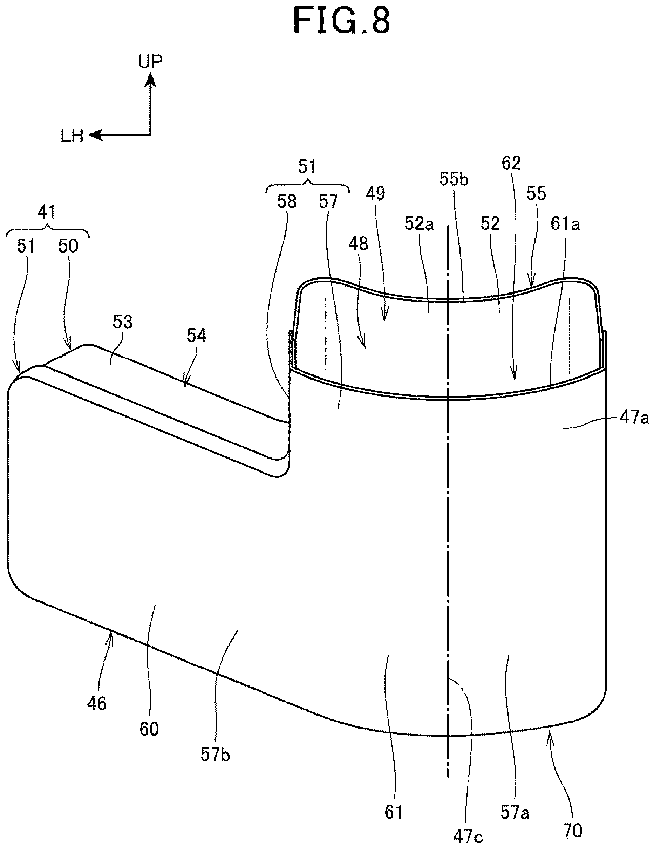

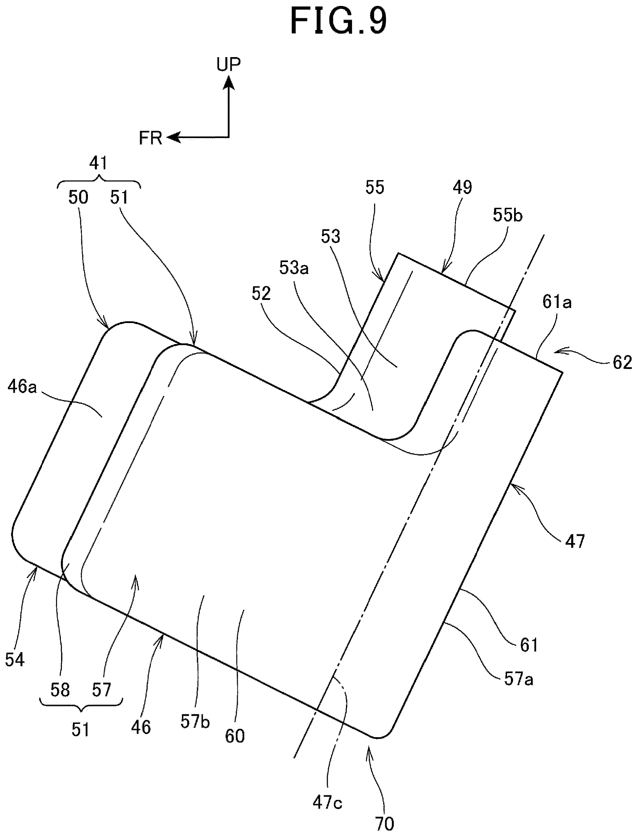

Fig. 8 is a front view of the airbag device 40 from which the cover member 44 is removed when seen from the rear side. Fig. 9 is a left side view of the airbag device 40 from which the cover member 44 is removed.

The cover 51 of the retainer 41 includes a retainer rear surface 57 facing the rider and the seat 13 from the front side and a rib 58 erecting forward from the whole circumference of the peripheral edge of the retainer rear surface 57 other than the top end.

The retainer rear surface 57 is formed into an L shape as in the case of the retainer front surface 52 and faces the retainer front surface 52 from the rear.

The cover 51 is coupled with the case 50 by the rib 58 engaging with the peripheral wall part 53 of the case 50 so as to overlap from outside. The cover 51 is coupled with the case 50 by means of, for example, welding bead along the rib 58.

The retainer rear surface 57 of the cover 51 is integrally provided with a left-right extending cover part 60 constituting the rear surface of the left-right extending part 46 and an up-down extending cover part 61 constituting the rear surface of the upward extending part 47.

The up-down extending cover part 61 constitutes a rear-side curved surface part 57a (curved surface part) facing the front-side curved surface part 52a (Fig. 7, Fig. 8) of the case 50 from the rear. When seen from above, the rear-side curved surface part 57a is formed into a curved surface which is curved so as to be convex rearward. The rear-side curved surface part 57a is provided over a substantially overall length in the up-down direction of the retainer rear surface 57.

The left-right extending cover part 60 constitutes a rear-side flat part 57b facing the front-side flat part 52b (Fig. 7) of the case 50 from the rear.

The upward extending part 47 of the retainer 41 includes a frame-shaped upper peripheral wall part 47a when seen from above at the top end. The top surface opening 49 is partitioned by the upper peripheral wall part 47a.

The upward extending part 47 of the retainer 41 includes a rider-side opening 62 which is opened toward the rider side in the rear. The rider-side opening 62 is obtained by cutting out the top end of the rear surface part of the upper peripheral wall part 47a downward and causes the top end part of the airbag housing space 48 to communicate with the rear part. The rider-side opening 62 is positioned in the rear of the top surface opening 49 and communicates with the top surface opening 49.

More specifically, as shown in Fig. 8, the rider-side opening 62 is formed in such a way as to cut out the top end 61a of the up-down extending cover part 61 of the retainer rear surface 57 of the cover 51 downward from the top end 55b of the up-down extending case part 55 of the retainer front surface 52 of the case 50. The rider-side opening 62 is formed over the entire top end of the up-down extending cover part 61 in the width direction. The level difference between the top end 61a of the up-down extending cover part 61 and the top end 55b of the up-down extending case part 55 is substantially the same over the entire up-down extending cover part 61 in the width direction.

Note that the top end 61a is the top end of the rear surface part of the upper peripheral wall part 47a of the retainer 41 as well.

The cover member 44 is integrally provided with a cover top surface part 44a that covers the top surface opening 49 from above and a cover peripheral wall part 44b that engages with the upper peripheral wall part 47a of the upward extending part 47.

The cover member 44 is attached to the retainer 41 with the inner surface of the cover peripheral wall part 44b engaging with the outer circumferential surface of the upper peripheral wall part 47a. The top surface opening 49 and the rider-side opening 62 are closed with the cover member 44.

A concave part 44c (Fig. 5) being dented downward to avoid the handle post 23a (Fig. 1) is formed in front of the cover top surface part 44a.

As shown in Fig. 2, Fig. 3, Fig. 5 and Fig. 7, the inflator 43 is provided in the left-right extending case part 54 of the left-right extending part 46 and is disposed offset in the left-right direction (left side) with respect to the steering shaft 20 positioned at the vehicle width center.

The inflator 43 is attached to the front-side flat part 52b (Fig. 7) of the retainer front surface 52 of the left-right extending case part 54.

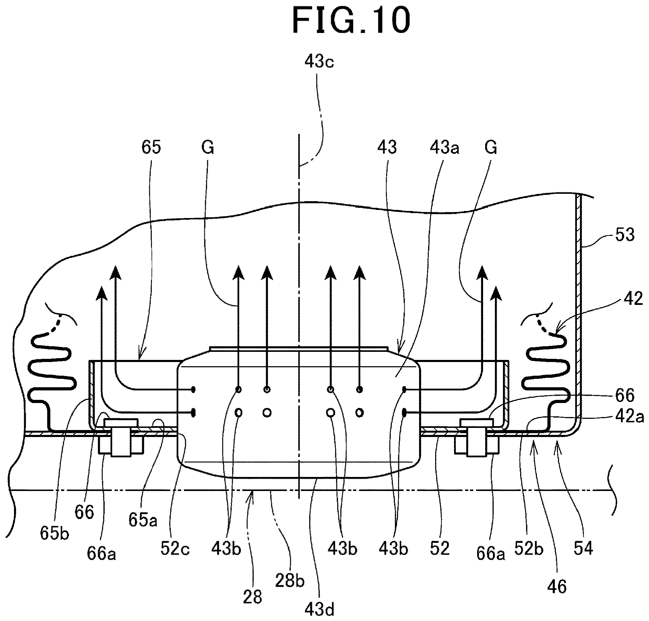

Fig. 10 is a cross-sectional view illustrating a state in which the inflator 43 is attached.

The inflator 43 includes a cylindrically (tubularly) formed housing 43a. A gas generating agent and an initiator that starts reaction for generating a gas in the gas generating agent are provided in the housing 43a. The initiator includes an ignition device. Note that a closed axial end face of the housing 43a is also included in the cylindrical form. Gas discharging holes 43b are formed on an outer circumferential surface of the housing 43a. A plurality of gas discharging holes 43b are provided side by side in the circumferential direction of the housing 43a.

An annular member 65 is integrally connected to the outer circumferential surface of the housing 43a. The annular member 65 includes a flange part 65a that extends in a diameter direction from the outer circumferential surface of the housing 43a and a peripheral wall part 65b that extends in an axial direction of the inflator 43 from the outer circumferential edge of the flange part 65a.

The housing 43a of the inflator 43 is inserted into an inflator support hole 52c formed in the retainer front surface 52 from the inside of the left-right extending case part 54. The housing 43a is positioned in the axial direction of the inflator 43 with the flange part 65a coming into contact with the inner surface of the retainer front surface 52.

The inflator 43 is fastened to the retainer front surface 52 via bolts 66 inserted into the flange part 65a and the retainer front surface 52 and nuts 66a being screwed into the bolts 66. A plurality of the bolts 66 and the nuts 66a are provided in the circumferential direction of the flange part 65a.

The flange part 65a has a rectangular outline when seen in the direction of an axis 43c of the inflator 43.

The peripheral wall part 65b of the annular member 65 is formed into a rectangular frame shape in an axial direction view of the axis 43c to cover the outer circumferential surface of the inflator 43 from outside. More specifically, the peripheral wall part 65b covers the plurality of gas discharging holes 43b from outside.

The inflator 43 discharges a gas G radially from the plurality of gas discharging holes 43b toward the outside in the diameter direction and the gas G changes the direction by hitting the inner peripheral surface of the peripheral wall part 65b and is discharged in the direction of the axis 43c of the inflator 43. That is, the direction in which the gas G of the inflator 43 is discharged into the airbag 42 is the extending direction of the axis 43c. The annular member 65 functions as a guide member that controls the gas G discharge direction.

The inflator 43 is disposed in the direction in which the axis 43c is oriented toward the front-rear direction of the vehicle. With the axis 43c being oriented toward the front-rear direction in this way, even when the inflator 43 has a large diameter, it is possible to reduce the space the inflator 43 occupies in the front-rear direction of the vehicle and provide the inflator 43 compactly in the front-rear direction.

An upstream end 42a of the airbag 42 in the flow of the gas G is held between the flange part 65a of the annular member 65 and the retainer front surface 52 and is thereby fixed to the retainer 41. Furthermore, the airbag 42 is fixed to the retainer 41 with the bolts 66 being inserted into the upstream end 42a.

The peripheral wall part 65b of the annular member 65 is positioned between the gas discharging holes 43b and the upstream end 42a of the airbag 42 in the diameter direction of the inflator 43. This prevents the gas G discharged from the gas discharging holes 43b from directly hitting the upstream end 42a of the airbag 42 and protects the airbag 42 from the gas G.

The front-end part 43d of the inflator 43 projects from the inflator support hole 52c toward the inner cover 28 side in front of the retainer front surface 52. Since the inflator 43 is disposed on the inner cover 28 side, it is possible to prevent the inflator 43 from standing out and prevent the inflator 43 from protruding to the straddle space 34 side.

As shown in Fig. 3, the airbag 42 is housed in the L-shaped airbag housing space 48 and provided from the left-right extending part 46 to the upward extending part 47.

The upstream end 42a of the airbag 42 is connected to the inflator 43 in the left-right extending part 46. The airbag 42 extends from the inflator 43 side in the left-right direction through the left-right extending part 46, and the downstream end thereof is positioned in the upward extending part 47.

The motorcycle 1 includes an acceleration sensor (not shown) that detects an impact acting on the motorcycle 1. The acceleration sensor is electrically connected to a control part (not shown) of the motorcycle 1 and the control part is electrically connected to the inflator 43. The control part determines operation and non-operation of the airbag device 40 based on the detected acceleration. When operating the airbag device 40, the control part operates the inflator 43 to discharge a gas into the airbag 42. The airbag 42 is inflated under a pressure of the gas and deployed upward.

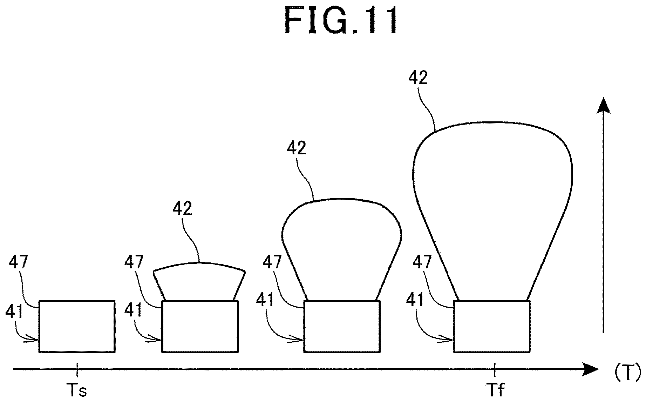

Fig. 11 is a diagram time-sequentially illustrating a state of deployment of the airbag 42. The horizontal axis in Fig. 11 represents an elapsed time T. A time Ts represents operation timing of the inflator 43 and a time Tf represents timing at which deployment is completed.

As shown in Fig. 11, the airbag 42 is inflated in order at the lower part, the middle part and the upper part over time and deployed so as to extend upward.

Here, the flow of the gas G discharged from the inflator 43 will be described.

As shown in Fig. 3, the inflator 43 discharges the gas G into the airbag 42 toward the rear of the vehicle along the axis 43c. That is, the gas G discharging direction of the inflator 43 is the extending direction of the axis 43c. It can also be said that the inflator 43 discharges the gas G toward the driver side along the axis 43c.

More specifically, the inflator 43 is disposed obliquely according to the inclination of the side part 28b of the inner cover 28 and discharges the gas G in the direction of the inclined axis 43c. The axis 43c of the inflator 43 is inclined to be positioned outward and downward in the vehicle width direction as the axis 43c goes to the rear side.

Note that in the present embodiment, the inflator 43 discharges the gas G rearward along the axis 43c, but the direction need not be right behind, and may be inclined within a predetermined angle range. For example, the axis 43c of the inflator 43 may be inclined with respect to the horizontal line extending rearward within a range of 45° in the up and down directions, respectively, in a side view of the vehicle. In a top surface view of the vehicle, the axis 43c may also be inclined with respect to the center line of the vehicle width within a range of 45° to the left and right, respectively.

The gas G discharged from the inflator 43 into the airbag 42 is guided in its path by the left-right extending part 46 and the upward extending part 47, and flows through the airbag housing space 48 in an L shape.

The gas G discharged rearward from the inflator 43 hits the inner surface of the left-right extending cover part 60 via the inner surface of the airbag 42, flows through the left-right extending part 46 in the left-right direction (right direction) and reaches the lower part of the upward extending part 47.

While flowing to the lower part of the upward extending part 47, the gas G hits the inner surface of the rear-side curved surface part 57a of the up-down extending cover part 61 via the inner surface of the airbag 42 and smoothly changes the direction along the rear-side curved surface part 57a. In the upward extending part 47, the front-side curved surface part 52a also has a curved surface shape, and so the gas G can be guided smoothly.

When the gas G flows from the left-right extending part 46 to the upward extending part 47, the flow changes from the left-right direction to the upward direction, and flows upward through the upward extending part 47. That is, the left-right extending part 46 and the upward extending part 47 constitute a deflection part 70 that deflects the flow of the gas G from the left-right direction to the upward direction.

As shown in Fig. 7, the retainer 41 includes a curved-surface-shaped bent part 53a in the corner where the flow of the gas G changes from the left-right direction to the upward direction. For this reason, since the gas G smoothly changes the direction along the bent part 53a, the gas G can flow efficiently.

When the airbag 42 is inflated upward by the gas G flowing upward through the upward extending part 47, the cover member 44 is pushed by the airbag 42 and is burst open. The airbag 42 is deployed by the upward flowing gas G upward from the top surface opening 49.

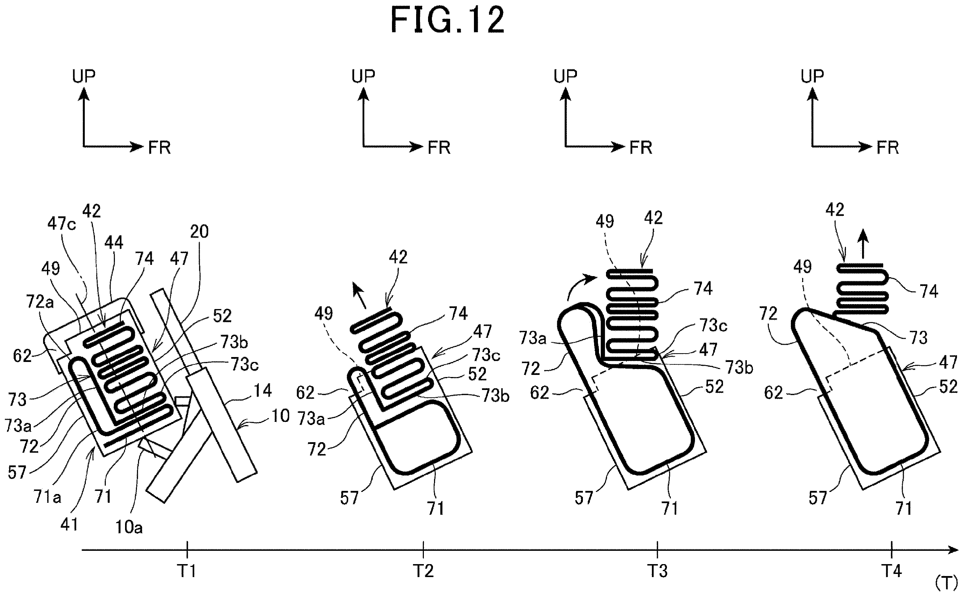

Fig. 12 is a diagram time-sequentially illustrating a state of deployment of the airbag 42 when seen from one side. In Fig. 12, the horizontal axis represents an elapsed time T. Note that in Fig. 12, the body frame 10 is shown only in a state at time T1. Fig. 12 shows the state in the interior of the upward extending part 47.

The retainer 41 is supported by the body frame 10 via a stay 10a which is provided in the body frame 10.

The state at time T1 shows a state in which the airbag 42 is not operating.

The airbag 42 includes a first folded part 71 which is provided so as to run along the bottom surface of the upward extending part 47, a second folded part 72 (upstream-side folded part) which is provided downstream of the first folded part 71, a third folded part 73 which is provided downstream of the second folded part 72, and a fourth folded part 74 (downstream-side folded part) which is provided downstream of the third folded part 73.

The second folded part 72 extends upward from a downstream end 71a of the first folded part 71 to the vicinity of the rider-side opening 62 along the inner surface of the retainer rear surface 57.

The third folded part 73 includes a downward extending part 73a that is folded forward and downward at a downstream end 72a of the second folded part 72 and extends downward along the second folded part 72, and a forward extending part 73b that is bent at the bottom end of the downward extending part 73a and extends forward along the top surface of the first folded part 71.

The fourth folded part 74 extends upward from a downstream end 73c of the third folded part 73. The fourth folded part 74 extends upward by stacking a plurality of folding parts folded in a bellows-shape (zig-zag shape) in a side view. The fourth folded part 74 extends upward along the center line 47c of the upward extending part 47 and is housed between the second folded part 72 and the inner surface of the retainer front surface 52.

Here, changes in a state of deployment of the airbag 42 will be described.

Referring to Fig. 12, at time T2, the gas G is discharged from the inflator 43 into the airbag 42 and the first folded part 71 is inflated. In this state, the first folded part 71 is inflated upward and the second folded part 72, the third folded part 73 and the fourth folded part 74 also move upward and the cover member 44 is burst open. Furthermore, the fourth folded part 74 moves upward from the top surface opening 49.

At time T3, the first folded part 71 is further inflated upward and the second folded part 72 is also inflated. In this state, the second folded part 72 is inflated upward from the rider-side opening 62 side and extends upward from the top surface opening 49. More specifically, during inflation, the second folded part 72 is inflated forward or rearward or upward or downward, and pushes the rear surface of the lower part of the fourth folded part 74 forward. This causes the fourth folded part 74 which has fallen rearward to have a vertical posture.

In the present embodiment, since the rider-side opening 62 is provided, inflation of the upper part of the second folded part 72 is hardly prevented by the top end part of the retainer rear surface 57. Therefore, it is possible to cause the upper part of the second folded part 72 to smoothly inflate and cause the second folded part 72 to push the fourth folded part 74 forward.

At time T4, the third folded part 73 is inflated, causing the fourth folded part 74 to move further upward.

After that, the gas G reaches the fourth folded part 74, the fourth folded part 74 is thereby deployed upward vertically and deployment of the airbag 42 is completed.

In this way, the airbag 42 can be deployed vertically by correcting the posture of the fourth folded part 74 vertically through inflation of the second folded part 72.

As shown in Fig. 2, a main switch 80 for switching on/off power of the motorcycle 1 is provided on the opposite side of the inflator 43 across the upward extending part 47 of the retainer 41. The main switch 80 is provided so as to be embedded in the side part 28b of the inner cover 28.

Furthermore, a housing box 81 is provided above the inflator 43. The housing box 81 is provided on the opposite side of the main switch 80 across the upward extending part 47 of the retainer 41.

The housing box 81 includes a housing part (not shown) provided such that the side part 28b of the inner cover 28 is dented forward and a lid 81a that covers the housing part in an openable/closable manner.

Since the housing box 81 is positioned above the left-right extending part 46 and outside the upward extending part 47, the housing box 81 can be easily opened/closed even when the airbag device 40 is attached to the inner cover 28.

As described above, according to the embodiment that applies the present invention, the airbag device 40 for the motorcycle 1 includes the retainer 41 provided in front of the seat 13 for the rider, the inflator 43 and the airbag 42 that is housed in the retainer 41, inflated by the gas G discharged by the inflator 43 and deployed in front of the rider, in which the retainer 41 includes the top surface opening 49 through which the upward deploying airbag 42 passes and the top surface opening 49 is disposed in the rear of the steering shaft 20. The retainer 41 includes the rider-side opening 62 that communicates with the top surface opening 49 and is opened to the rear seat 13 side. Thus, the retainer 41 can be disposed compactly in the rear of the steering shaft 20. Furthermore, with the gas G discharged by the inflator 43, the airbag 42 inflated upward from the top surface opening 49 is easily inflated on the rider-side opening 62 side. The airbag 42 is inflated preferentially on the rider-side opening 62 side, and it is thereby possible to create operation of the airbag 42 falling forward, and so the airbag 42 can be inflated vertically upward. Furthermore, depending on the size of the rider-side opening 62, the behavior of inflation of the airbag 42 in the rider-side opening 62 changes. For this reason, it is possible to adjust the operation of the airbag 42 falling forward by adjusting the size of the rider-side opening 62.

Furthermore, in a side view, the retainer 41 is disposed obliquely along the steering shaft 20. Thus, the retainer 41 can be disposed compactly along the steering shaft 20. Furthermore, the airbag 42 deployed upward from the retainer 41 which is disposed obliquely can be deployed vertically upward so as to fall forward.

The retainer 41 is formed into a box shape provided with the top surface opening 49 at the top surface, and includes the retainer rear surface 57 facing the seat 13 side and the retainer front surface 52 facing the retainer rear surface 57, and the airbag 42 is folded and housed in the retainer 41. The airbag 42 includes the second folded part 72 and the fourth folded part 74 located downstream of the second folded part 72 in the flow of the gas G, the second folded part 72 extends vertically along the retainer rear surface 57, and the fourth folded part 74 is housed between the second folded part 72 and the retainer front surface 52. When the airbag 42 is deployed by the gas G, the up-down extending second folded part 72 along the retainer rear surface 57 is deployed before the fourth folded part 74. The fourth folded part 74 is caused to fall forward by the precedingly deployed second folded part 72. For this reason, even with the configuration in which the retainer 41 is disposed obliquely along the steering shaft 20, the airbag 42 can be deployed vertically upward.

The rider-side opening 62 is obtained by cutting out the top end 61a of the rear surface part of the upper peripheral wall part 47a of the retainer 41 that partitions the top surface opening 49. The rider-side opening 62 can be provided in a simple structure in which the top end 61a of the upper peripheral wall part 47a of the retainer 41 is cut out.

Furthermore, the retainer 41 includes the box-shaped case 50, the rear surface of which is opened and the cover 51 that covers the rear surface opening 50a of the case 50, and the rider-side opening 62 is obtained by cutting out the top end 61a of the cover 51. It is thereby possible to provide the box-shaped retainer 41, the rear surface of which is closed with the cover 51 and provide the rider-side opening 62 in a simple structure in which the top end 61a of the cover 51 is cut out.

Moreover, the top surface opening 49 and the rider-side opening 62 are closed with the cover member 44 attached to the top end part of the retainer 41. This makes it possible to hide the top surface opening 49 and the rider-side opening 62 with the cover member 44, improve appearance characteristics and prevent foreign substance such as dirt from entering the retainer 41.

According to the embodiment that applies the present invention, the airbag device 40 for the motorcycle 1 includes the retainer 41 provided in front of the seat 13 for the rider, the inflator 43 and the airbag 42 that is housed in the retainer 41, inflated by the gas G discharged from the inflator 43 and deployed in front of the rider, in which the cylindrically formed inflator 43 is disposed in the direction in which the axis 43c is oriented toward the front-rear direction of the vehicle, and the retainer 41 includes the deflection part 70 that deflects the gas G discharged from the inflator 43 into the airbag 42 from the flow in the left-right direction to a flow in the upward direction. This makes it possible to dispose the inflator 43 in the front-rear direction in a space-saving manner, and provide the airbag device 40 compactly in the front-rear direction. Furthermore, the gas G of the inflator 43 is deflected by the deflection part 70 from the flow in the left-right direction to a flow in the upward direction, and it is thereby possible to deploy the airbag 42 upward.

The deflection part 70 includes the left-right extending part 46 that extends in the left-right direction from the inflator 43 side and the upward extending part 47 that extends upward from the left-right extending part 46. It is thereby possible for the left-right extending part 46 to guide the gas G discharged from the inflator 43 in the left-right direction and for the upward extending part 47 to guide the gas G upward and deploy the airbag 42 upward.

Furthermore, the upward extending part 47 is disposed in the rear of the steering shaft 20, and the inflator 43 and the main switch 80 of the motorcycle 1 are disposed on the left and right across the upward extending part 47. This makes it possible to deploy the airbag 42 upward from the steering shaft 20 side and efficiently dispose the inflator 43 and main switch 80 on the left and right of the upward extending part 47.

Furthermore, the housing box 81 is disposed above the inflator 43. This makes it possible to provide the housing box 81 using a space above the inflator 43.

Furthermore, the upward extending part 47 includes the rear-side curved surface part 57a that receives the gas G flowing into the upward extending part 47 from the left-right extending part 46. In this way, the rear-side curved surface part 57a receives the gas G flowing from the left-right extending part 46 into the upward extending part 47, and it is thereby possible to cause the gas G to smoothly flow upward and efficiently deploy the airbag 42.

The deflection part 70 is formed of the left-right extending part 46 and the upward extending part 47 into an L shape, and the L-shaped bent part 53a is formed into a curved surface shape. It is thereby possible to efficiently guide the gas G that changes the direction upward in the L-shaped deflection part 70 using the curved surface shaped bent part 53a and cause the gas G to smoothly flow upward.

According to the embodiment that applies the present invention, the airbag device 40 for the motorcycle 1 includes the retainer 41 provided in front of the seat 13 for the rider, the inflator 43 and the airbag 42 that is housed in the retainer 41, inflated by the gas G discharged from the inflator 43 and deployed in front of the rider, in which the cylindrically formed inflator 43 is disposed in the direction in which the axis 43c is oriented toward the front-rear direction of the vehicle. It is thereby possible to dispose the inflator 43 in the front-rear direction in a space-saving manner and provide the airbag device 40 in the front-rear direction compactly.

The inflator 43 and the airbag 42 are fixed to the retainer 41 via the annular member 65 that surrounds the inflator 43 and the annular member 65 is positioned between the inflator 43 and the airbag 42. This allows the annular member 65 to fix the inflator 43 and the airbag 42 in a simple structure. The annular member 65 positioned between the inflator 43 and the airbag 42 can control the discharging direction of the gas G and prevent the gas G discharged from the inflator 43 from directly hitting the airbag 42.

The body cover 26 of the motorcycle 1 includes the inner cover 28 that covers the steering shaft 20 from behind and faces the seat 13 from the front and the retainer 41 is provided on the rear surface of the inner cover 28. Thus, it is possible to provide the airbag device 40 at an appropriate position in front of the rider by providing the retainer 41 for the inner cover 28 that covers the steering shaft 20 in front of the seat 13.

Furthermore, the retainer 41 is formed into a box shape, includes the retainer rear surface 57 facing the seat 13 side and the retainer front surface 52 facing the retainer rear surface 57, and the inflator 43 is fixed to the retainer front surface 52. In this way, the inflator 43 is fixed to the retainer front surface 52 and is hardly visually recognizable from the rider side, providing good appearance characteristics. Furthermore, it is possible to prevent the inflator 43 from projecting toward the retainer rear surface 57 side, secure a large space between the rider and the airbag device 40 and improve comfortability of the rider.

Furthermore, the inflator 43 is disposed offset in the left-right direction with respect to the vehicle width center. This makes it possible to reduce the size of the retainer 41 in the front-rear direction at the vehicle width center, secure a large space between the rider and the airbag device 40 at the vehicle width center. Here, the inflator 43 is provided along the side part 28b of the inner cover 28 inclined to position on the front side as it goes outside in the vehicle width direction, and so the inflator 43 can be disposed in the front-rear direction compactly. For this reason, it is possible to secure space between the airbag device 40 and the rider.

The gas G discharged from the inflator 43 is guided by the retainer 41 so as to change the direction from the left-right direction to the up-down direction, and the airbag 42 is deployed upward from the vehicle width center. In this way, even with a configuration in which the inflator 43 is disposed offset in the left-right direction, the gas G is guided by the retainer 41 and it is thereby possible to deploy the airbag 42 upward from the vehicle width center.

Note that the above-described embodiment shows an aspect to which the present invention is applied, but the present invention is not limited to the above-described embodiment.

In the above-described embodiment, the inflator 43 has been described as discharging the gas G into the airbag 42 toward the rear of the vehicle along the axis 43c, but the present invention is not limited to this. For example, a configuration may also be adopted in which the inflator 43 is provided on the cover 51 side and the gas is discharged in front of the vehicle along the axis 43c.

Furthermore, a configuration may also be adopted in which the retainer is provided in an L shape opposite to that shown in Fig. 2 with reference to the center line 47c and the gas flowing through the retainer from the right side to the vehicle width center is deflected upward.

In the above-described embodiment, the inflator 43 has been described assuming that the housing 43a (Fig. 10) is inserted into the inflator support hole 52c of the retainer front surface 52 from the inside of the left-right extending case part 54, but without being limited to this, a configuration may also be adopted in which the housing 43a is inserted into the inflator support hole 52c from the outside of the left-right extending case part 54. In this case, when the flange part provided on the outer circumference of the housing 43a comes into contact with the outer surface of the retainer front surface 52, the inflator 43 is, for example, positioned in the axial direction of the inflator 43 and fixed to the retainer front surface 52 with bolts inserted from the outside of the left-right extending case part 54. According to this configuration, the inflator 43 can be attached or detached from the outside of the retainer 41, providing excellent assemble ability.

Furthermore, according to the above-described embodiment, the inflator 43 is formed into a cylindrical shape centered on the axis 43c of the cylindrically formed housing 43a, but the present invention is not limited to this. The inflator 43 may be formed into a cylindrical shape of a polygon such as a rectangle and the axis may be disposed oriented toward the front-rear direction of the vehicle.

Furthermore, although the motorcycle 1 has been taken as an example of the saddle-type vehicle in the above-described embodiment, the present invention is not limited to this, and the present invention is also applicable to a three-wheel saddle-type vehicle with two front wheels or rear wheels or a saddle-type vehicle with four or more wheels or the like.

### [Reference Signs List]

- 1: motorcycle (saddle-type vehicle)
- 13: seat
- 20: steering shaft
- 40: airbag device
- 41: retainer
- 42: airbag
- 43: inflator
- 43c: axis
- 46: left-right extending part
- 47: upward extending part
- 53a: bent part
- 57a: rear-side curved surface part (curved surface part)
- 70: deflection part
- 80: main switch
- 81: housing box

## Claims

1. An airbag device for a saddle-type vehicle comprising:
a box-shaped retainer (41) that is provided in front of a seat (13) for a rider, the retainer (41) has a cover member (44) attached to the top of the retainer (41) ;
a cylindrically formed inflator (43) that is housed in the retainer (41); and
an airbag (42) that is housed in the retainer (41), is inflated by means of a gas discharged from the inflator (43) and is deployed in front of the rider,
**characterized in that**
the inflator (43) is disposed oriented in a front-rear direction of the vehicle toward which an axis (43c) of the inflator (43) is oriented, and
the retainer (41) comprises a deflection part (70) that deflects the gas discharged from the inflator (43) that is housed in the retainer (41) at downstream of the inflator (43) into the airbag (42) from a flow in a left-right direction to a flow in an upward direction.

2. The airbag device for a saddle-type vehicle according to claim 1, wherein the deflection part (70) comprises a left-right extending part (46) that extends in the left-right direction from the inflator (43) side and an upward extending part (47) that extends upward from the left-right extending part (46).

3. The airbag device for a saddle-type vehicle according to claim 2, wherein the upward extending part (47) is disposed in the rear of a steering shaft (20) and the inflator (43) and a main switch (80) of the saddle-type vehicle are disposed separately on the left and right across the upward extending part (47).

4. The airbag device for a saddle-type vehicle according to claim 3, wherein a housing box (81) is disposed above the inflator (43).

5. The airbag device for a saddle-type vehicle according to any one of claims 2 to 4, wherein the upward extending part (47) comprises a curved surface part (57a) that receives the gas that flows from the left-right extending part (46) into the upward extending part (47).

6. The airbag device for a saddle-type vehicle according to any one of claims 2 to 5, wherein the deflection part (70) is formed of the left-right extending part (46) and the upward extending part (47) into an L shape, and the L-shaped bent part (53a) is formed into a curved surface shape.

## Patentansprüche

1. Airbagvorrichtung für ein Sattelfahrzeug, welche aufweist:
einen kastenförmigen Halter (41), der vor einem Sitz (13) für einen Fahrer vorgesehen ist, wobei der Halter (41) ein Deckelelement (44) aufweist, das oben an dem Halter (41) angebracht ist;
einen zylindrisch geformten Inflator (43), der in dem Halter (41) aufgenommen ist; und
einen Airbag (42), der in dem Halter (41) aufgenommen ist, mittels von dem Inflator (43) abgegebenem Gas aufgeblasen wird und vor dem Fahrer entfaltet wird, **dadurch gekennzeichnet, dass**
der Inflator (43) so angeordnet ist, dass er in einer Vorne-Hinten-Richtung des Fahrzeugs orientiert ist, zu der eine Achse (43c) des Inflators (43) orientiert ist, und
der Halter (41) stromab des Inflators (43) ein Ablenkteil (70) aufweist, das das Gas, das von dem im Halter (41) aufgenommenen Inflator (43) abgegeben wird, von einer Strömung in einer Links-Rechts-Richtung zu einer Strömung in einer aufwärtigen Richtung in den Airbag (42) ablenkt.

2. Die Airbagvorrichtung für ein Sattelfahrzeug nach Anspruch 1, wobei das Ablenkteil (70) ein links-rechts erstreckendes Teil (46) aufweist, das sich in der Links-Rechts-Richtung von der Inflator (43)-Seite erstreckt, sowie ein aufwärts erstreckendes Teil (47), das sich von dem links-rechts erstreckenden Teil (46) aufwärts erstreckt.

3. Die Airbagvorrichtung für ein Sattelfahrzeug nach Anspruch 2, wobei das aufwärts erstreckende Teil (47) hinter einem Lenkschaft (20) angeordnet ist und der Inflator (43) und ein Hauptschalter (80) des Sattelfahrzeugs links und rechts quer zum aufwärts erstreckenden Teil (47) separat angeordnet sind.

4. Die Airbagvorrichtung für ein Sattelfahrzeug nach Anspruch 3, wobei ein Aufnahmekasten (81) über dem Inflator (43) angeordnet ist.

5. Die Airbagvorrichtung für ein Sattelfahrzeug nach einem der Ansprüche 2 bis 4, wobei das aufwärts erstreckende Teil (47) ein gekrümmtes Oberflächenteil (57a) aufweist, das das Gas aufnimmt, das von dem links-rechts erstreckenden Teil (46) in das aufwärts erstreckende Teil (47) fließt.

6. Die Airbagvorrichtung für ein Sattelfahrzeug nach einem der Ansprüche 2 bis 5, wobei das Ablenkteil (70) aus dem links-rechts erstreckenden Teil (46) und dem aufwärts erstreckenden Teil (47) zu einer L-Form ausgebildet ist, und das L-förmige gebogene Teil (53a) zu einer gekrümmten Oberflächenform ausgebildet ist.

## Revendications

1. Dispositif de coussin de sécurité gonflable pour un véhicule de type à selle comprenant :
un dispositif de retenue en forme de boîte (41) qui est prévu en face d'une selle (13) pour un motocycliste, le dispositif de retenue (41) a un élément de couvercle (44) fixé sur la partie supérieure du dispositif de retenue (41) ;
un gonfleur de forme cylindrique (43) qui est logé dans le dispositif de retenue (41) ; et
un coussin de sécurité gonflable (42) qui est logé dans le dispositif de retenue (41), est gonflé au moyen d'un gaz déchargé par le gonfleur (43) et est déployé en face du motocycliste, **caractérisé en ce que** :
le gonfleur (43) est disposé, orienté dans une direction avant - arrière du véhicule vers laquelle un axe (43c) du gonfleur (43) est orienté, et
le dispositif de retenue (41) comprend une partie de déviation (70) qui dévie le gaz déchargé par le gonfleur (43) qui est logé dans le dispositif de retenue (41) en aval du gonfleur (43) dans le coussin de sécurité gonflable (42), d'un écoulement dans une direction gauche - droite jusqu'à un écoulement dans une direction ascendante.

2. Dispositif de coussin de sécurité gonflable pour véhicule de type à selle selon la revendication 1, dans lequel la partie de déviation (70) comprend une partie s'étendant à gauche - droite (46) qui s'étend dans la direction gauche - droite à partir du côté du gonfleur (43) et une partie s'étendant vers le haut (47) qui s'étend vers le haut à partir de la partie s'étendant à gauche - droite (46).

3. Dispositif de coussin de sécurité gonflable pour véhicule de type à selle selon la revendication 2, dans lequel la partie s'étendant vers le haut (47) est disposée dans la partie arrière d'un arbre de direction (20) et le gonfleur (43) et un commutateur principal (80) du véhicule de type à selle sont disposés séparément à gauche et droite de part et d'autre de la partie s'étendant vers le haut (47).

4. Dispositif de coussin de sécurité gonflable pour véhicule de type à selle selon la revendication 3, dans lequel un boîtier de logement (81) est disposé au-dessus du gonfleur (43).

5. Dispositif de coussin de sécurité gonflable pour véhicule de type à selle selon l'une quelconque des revendications 2 à 4, dans lequel la partie s'étendant vers le haut (47) comprend une partie de surface incurvée (57a) qui reçoit le gaz qui s'écoule à partir de la partie s'étendant à gauche - droite (46) dans la partie s'étendant vers le haut (47).

6. Dispositif de coussin de sécurité gonflable pour véhicule de type à selle selon l'une quelconque des revendications 2 à 5, dans lequel la partie de déviation (70) est formée de la partie s'étendant à gauche - droite (46) et de la partie s'étendant vers le haut (47) dans une forme de L, et la partie pliée en forme de L (53a) est formée dans une forme de surface incurvée.
